**Europäisches Patentamt**

**European Patent Office**

**Office européen des brevets**

(19)

(11) Veröffentlichungsnummer : **0 131 846**
**B1**

(12) **EUROPÄISCHE PATENTSCHRIFT**

(45) Veröffentlichungstag der Patentschrift :
30.12.86

(51) Int. Cl.⁴ : **C 08 G 63/60**

(21) Anmeldenummer : **84107730.8**

(22) Anmeldetag : **04.07.84**

(54) **Thermotrope aromatische Polyester mit hoher Zähigkeit und verbesserter Schmelzviskosität, Verfahren zu ihrer Herstellung und ihre Verwendung zur Herstellung von Formkörpern, Filamenten, Fasern und Folien.**

(30) Priorität : **16.07.83 DE 3325705**

(43) Veröffentlichungstag der Anmeldung :
**23.01.85 Patentblatt 85/04**

(45) Bekanntmachung des Hinweises auf die Patenterteilung : **30.12.86 Patentblatt 86/52**

(84) Benannte Vertragsstaaten :
**DE FR GB IT NL**

(56) Entgegenhaltungen :
**EP-A- 0 001 340**

(73) Patentinhaber : **BAYER AG**
**Konzernverwaltung RP Patentabteilung**
**D-5090 Leverkusen 1 Bayerwerk (DE)**

(72) Erfinder : **Dicke, Hans-Rudolf, Dr.**
**Bodelschwinghstrasse 16**
**D-4150 Krefeld (DE)**
Erfinder : **Schmidt, Manfred, Dr.**
**Bodelschwinghstrasse 20**
**D-4150 Krefeld (DE)**
Erfinder : **El-Sayed, Aziz, Dr.**
**Saarlauternerstrasse 39**
**D-5090 Leverkusen (DE)**
Erfinder : **Biskup, Ulrich, Dr.**
**Morgengraben 14**
**D-5000 Köln 80 (DE)**
Erfinder : **Bottenbruch, Ludwig, Dr.**
**Wöhlerstrasse 5**
**D-4150 Krefeld (DE)**
Erfinder : **Freitag, Dieter, Dr.**
**Hasenheide 10**
**D-4150 Krefeld-Traar (DE)**

## Beschreibung

Die Erfindung betrifft hochmolekulare thermotrope voll-aromatische Polyester mit hoher Schlagzähigkeit und günstiger Schmelzviskosität, ein Verfahren zu ihrer Herstellung und ihre Verwendung zur Herstellung von Formkörpern, Filamenten, Fasern und Folien.

Als « thermotrop » bezeichnet man solche Polykondensate, die flüssig-kristalline Schmelzen bilden. Sie sind hinreichend bekannt, vergleiche z. B.

F. E. McFarlane et al., Liquid Crystal Polymers II, Contemporary Topics in Polymer Science, Vol. 2, Plenum Publishing Corporation, 1977 ;

W. J. Jackson und H. F. Kuhfuss, J. Polymer Science, Polymer Chem. Ed. *14*, 2042 (1976) ;

W. C. Wooten et al. in A. Ciferri « Ultra-high Modulus Polymers », Applied Science Publ., London 1979, S. 362 f. ;

A. Blumstein et al., « Liquid Crystalline Order in Polymers », Academic Press 1978 ;

EP 22 344, 26 720, 15 856, 17 310, 15 088, 8 855, WO 79/01034, 79/797 und DE-OS 2 751 653.

Der flüssig-kristalline Zustand der Polykondensatschmelzen läßt sich mit Hilfe eines Polarisationsmikroskops untersuchen : Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 µm.

Die Untersuchung der flüssig-kristallinen Schmelzen erfolgte nach dem Aufschmelzen der Proben bei Temperaturen, zwischen 250 °C und 400 °C. Sofern in diesem gesamten Bereich oder in einem Teil davon eine flüssigkristalline Schmelze beobachtet wird, nennen wir das Polykondensat thermotrop.

Um sicherzustellen, daß die optische Anisotropie der Schmelzen auf einen flüssig-kristallinen Zustand und nicht etwa auf in der Schmelze schwimmende Kristalle des Polykondensats zurückzuführen ist, wurde die Schmelze nach der Messung noch weitere 30 °C über die Untersuchungstemperatur aufgeheizt. Kristalle schmelzen dabei auf, wodurch die optische Anisotropie der Schmelze verschwindet. Nur wenn die Aufhellung der zwischen Nicolschen Prismen beobachteten Schmelze trotz des weiteren Aufheizens nicht verschwand, wurden die Polykondensate als thermotrop eingestuft. Sie zeigten in der Meßanordnung Werte über 1 Skalenteil, meist Werte von 3 bis 90 Skalenteilen. Für amorphe Schmelzen, z. B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z. B. bei G. W. Gray und P. A. Windsor, « Plastic Crystals, Physico-Chemical Properties and Methods of Investigation », insbesondere Chapter 3, John Wiley & Sons, New York, Sydney, Toronto 1974 beschrieben ist.

Die DE-OS 20 25 971 betrifft hochmolekulare voll-aromatische Polyester auf Basis von p-Hydroxybenzoesäure, aromatischen Dicarbonsäuren (wie Terephthal- und Isophthalsäure) und Diphenolen (wie Hydrochinon oder 4,4'-Dihydroxybiphenyl). Aufgrund der verwendeten Komponenten sind diese Polyester thermotrop ; sie können z. B. zu Fasern verarbeitet werden. Von den 13 Polyestern der Beispiele schmilzt ein einziger unter 300 °C. Diese Polyester sind also schlecht verarbeitbar.

Die EP-PS 1340 betrifft voll-aromatische thermotrope Polyester, die im wesentlichen aus einkondensierten Resten von p-Hydroxybenzoesäure, 2,6-Dihydroxynaphthalin und Terephthalsäure bestehen. Eigene Untersuchungen haben ergeben, daß diese Polyester relativ hohe Schmelzviskosität sowie geringe Schmelzfließfähigkeit aufweisen. Formkörper aus diesen Polyestern besitzen Zähigkeiten, die nicht allen Anforderungen gerecht werden.

Aufgabe der Erfindung war es daher, thermotrope voll-aromatische Polyester bereitzustellen, die gegenüber den Polyestern der DE-OS 20 25 971 und der EP-PS 1340 besser verarbeitbar sind und dennoch hervorragende mechanische Eigenschaften aufweisen.

Weitere Aufgabe der Erfindung war es, thermotrope voll-aromatische Polyester zur Verfügung zu stellen, die durch thermoplastische Verformung zu Formteilen verarbeitet werden können, welche hohe Zähigkeit besitzen.

Überraschenderweise wurde gefunden, daß voll-aromatische Polyester, die einkondensierte Reste von p-Hydroxybenzoesäure, Iso- und/oder Terephthalsäure und 2,7-Dihydroxynaphthalin enthalten, die gewünschte Kombination vorteilhafter Eigenschaften besitzen.

Gegenstand der Erfindung sind thermotrope voll-aromatische Polyester auf Basis von

    (a) (gegebenenfalls substituierter) p-Hydroxybenzoesäure,

    (b) (gegebenenfalls substituierter) Iso- und/oder Terephthalsäure,

    (c) 2,7-Dihydroxynaphthalin und gegebenenfalls

    (d) Hydrochinon, Resorcin, Bisphenol-A, 4,4'-Dihydroxydiphenyl, -diphenylether, -diphenylsulfid und/oder -diphenylsulfon, die gegebenenfalls substituiert sind,

wobei die Polyester die einkondensierten Reste (a) in Mengen von mindestens 40 Mol-%, bezogen auf die

2

Summe der Reste (a), (b), (c) und (d), die einkondensierten Reste (c) und gegebenenfalls (d) in Mengen von 5 bis 30, vorzugsweise 15 bis 30, insbesondere 20 bis 25 Mol-%, bezogen auf die Summe der Reste (a), (b), (c) und (d), und die einkondensierten Reste (d) in Mengen von bis zu 90, vorzugsweise 10 bis 60, insbesondere 20 bis 35, Mol-%, bezogen auf die Summe der Komponenten (c) und (d), enthalten, mit der Maßgabe, daß das Molverhältnis der einkondensierten Reste b/(c + d) 0,95 bis 1,05 beträgt.

Bevorzugte (a) p-Hydroxybenzoesäuren sind durch 1 bis 2 $C_1$-$C_4$-Alkyl, $C_1$-$C_4$-Alkoxy, $C_6$-$C_{10}$-Aryl oder $C_7$-$C_{12}$-Alkyl-aryl (wie Phenyl, Tolyl, Naphthyl), Halogen (vorzugsweise Chlor und Brom) kernsubstituierte p-Hydroxybenzoesäuren, z. B. 4-Hydroxy-2-methylbenzoesäure, 4-Hydroxy-3-methyl-benzoesäure, 2-Ethyl-4-hydroxybenzoesäure, 3-Ethyl-4-hydroxybenzoesäure, 2- oder 3-Chlor-4-hydroxybenzoesäure, 4-Hydroxy-2-phenylbenzoesäure oder 4-Hydroxy-3-phenylbenzoesäure, vorzugsweise jedoch unsubstituierte p-Hydroxybenzoesäure selbst.

Bevorzugte (b) Iso- und Terephthalsäuren sind Produkte, die — wie oben für (a) beschrieben — substituiert sind, insbesondere aber unsubstituierte Iso- und Terephthalsäure selbst.

Bis zu 4 Wasserstoffatome der Verbindungen (d) können durch $C_1$-$C_4$-Alkyl, $C_1$-$C_4$-Alkoxy, Halogen (vorzugsweise Chlor und Brom) oder Phenyl substituiert sein. Bevorzugte Verbindungen (d) sind entweder unsubstituiert oder methylsubstituiert, wie z. B. Hydrochinon oder 3,3',5,5'-Tetramethyl-4,4'-dihydroxydiphenyl.

Die erfindungsgemäßen Polyester können die Reste der Verbindungen (a) bis (d) in statistischer Verteilung, in Segmenten oder in Blöcken enthalten. Betreffend Komponente (a) ist zu beachten, daß längere Blöcke den Schmelzpunkt und die Schmelzviskosität stark erhöhen können.

Als Endgruppen können die erfindungsgemäßen Polyester —COOH, —H, —OH, —$OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol, und aromatische Monocarbonsäuren, wie Diphenylcarbonsäuren und Naphthalincarbonsäuren. Kettenabbrecher können in Mengen von 0,5 bis 5 Mol-%, bezogen auf die Summe der Komponenten a und b, eingesetzt werden.

Gegebenenfalls können auch verzweigende drei- oder höherfunktionelle — vorzugsweise aromatische — Monomere in Menge von 0,1 bis 1 Mol-%, bezogen auf die Summe der Komponenten a und b, wie z. B. Phloroglucin, 1,3,5-Benzoltricarbonsäure und 3,5-Dihydroxybenzoesäure, eingesetzt werden.

Die erfindungsgemäßen Polyester besitzen in der Regel eine inhärente Viskosität von mindestens 0,5, vorzugsweise von mindestens 1,0, dl/g (gemessen an einer Lösung von 5 mg Polyester/ml p-Chlorphenol bei 45 °C). Sollten Polyester in p-Chlorphenol unlöslich sein, wird angenommen, daß sie die angegebene Mindestviskosität besitzen ; sie sind somit erfindungsgemäß, sofern sie den Parametern des Hauptanspruchs genügen.

Die erfindungsgemäßen Polyester besitzen vorzugsweise eine Schmelzviskosität von weniger als 1 000 Pa · s, gemessen bei einer Schergeschwindigkeit von $10^3$ $sec^{-1}$ unter Verwendung einer Düse mit einem Länge/Durchmesserverhältnis von 20 bei einer Temperatur von weniger als 340 °C, vorzugsweise weniger als 310 °C.

Die erfindungsgemäßen Polyester können nach verschiedenen Verfahren hergestellt werden, z. B. durch Kondensation bzw. Umesterung der reaktiven Derivate, der Verbindungen (a) bis (d), z. B. ihrer Ester bzw. Säurechloride, und anschließende Polykondensation.

Beispiele für bevorzugte Ausgangsverbindungen sind also ihre Arylester, ihre Acylester und ihre Säurechloride.

Nach einem bevorzugten Syntheseverfahren werden die niederen Acylester, vorzugsweise die Acetate, der Verbindungen (a), (c) und gegebenenfalls (d) mit Iso- und/oder Terephthalsäure (b) umgesetzt, wobei die Acylester auch in situ hergestellt werden können.

Die Reste der Verbindungen (a) bis (d) werden im Verhältnis der Ausgangskomponenten in den Polyester eingebaut.

Die erfindungsgemäßen Polyester sind vorzugsweise frei von Carbonatgruppen.

Es ist zweckmäßig, sowohl die Kondensations- bzw. Umesterungsreaktionen als auch die Polykondensationsreaktionen katalytisch zu beschleunigen. Derartige Katalysatoren sind bekanntlich z. B. Lewis-Säuren und Halogenwasserstoffsäuren ; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Alkalimetalle, z. B. Magnesium, Calcium ; der Nebengruppenelemente, z. B. Vanadium, Titan, Mangan, Cobalt, Nickel, Zink, Lanthan, Cer, Zirkonium oder der Elemente aus anderen Gruppen des Periodensystems, z. B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutyl-zinn-diacetat, Di-butyl-dimethoxy-zinn. Besonders bevorzugte sind Magnesium-, Mangan-, Natrium-, Kalium- und Zinkacetat.

Die Katalysatormengen betragen vorzugsweise 0,001 bis 1, insbesondere 0,01 bis 0,2 Gew.-%, bezogen auf das Gesamtgewicht der eingesetzten Monomeren.

Die erfindungsgemäßen Polyester können bei Temperaturen von 160 bis 370 °C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann — vorzugsweise in Granulatform — einer Festphasennachkondensation unter vermindertem Druck bei Temperaturen von 200 bis 300 °C unterworfen werden ; nach 5 bis 25 Stunden haben sich Molekulargewicht erhöht und die daraus resultierenden Eigenschaften des Polyesters merklich verbessert.

Weiterer Gegenstand der Erfindung ist also ein Verfahren zur Herstellung der neuen Polyester durch Umsetzung der Komponenten (a) bis (c) und gegebenenfalls (d) bzw. ihrer reaktionsfähigen Derivate, die auch in situ hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem Druck.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, das heißt, daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit, außerordentlicher Zähigkeit und großer Dimensionsstabilität hergestellt werden. Da die Polyester außerordentlich chemikalienresistent und flammwidrig sind, eignen sie sich bevorzugt zur Herstellung von

— elektrotechnischen Artikeln, z. B. Isolatoren, gedruckten Schaltungen, Steckkontakte, Armaturenteile,

— Teilen chemisch-technischer Apparate, z. B. Rohre, Behälterauskleidungen, Rotoren, Gleitlager, Dichtungen,

— Teilen der Flugzeuginnenausstattung,

— Teilen medizinisch-technischer Geräte, z. B. Bauteile von Klimaanlagen, Ventilteile.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5 bis 65 Gew.-%, bezogen auf verstärkte bzw. gefüllte Formmasse, sind sie bestens geeignet.

Weiterer Gegenstand der Erfindung ist also die Verwendung der neuen Polyester zur Herstellung von Formkörpern, Filamenten, Fasern und Filmen.


Beispiele

Die Prüfung der Schlagzähigkeit $a_n$ und Kerbschlagzählgkeit $a_k$ erfolgte an Normkleinstäben gemäß DIN 53 453 (ISO/R 179) bei 23 °C jeweils an 10 Prüfkörpern. Die Bestimmung der Biegefestigkeit wurde an Normkleinstäben gemäß DIN 53 452 (ISO R 178) durchgeführt. Der Biege-E-Modul wurde gemäß DIN 53 457 ermittelt. Die Messung der Wärmeformbeständigkeit erfolgte durch Bestimmungen der Vicat-B-Erweichungstemperatur gemäß DIN 53 460 (ISO 306).


Beispiel 1

In ein 1 l-Planschliffgefäß mit Planschliffdeckel, Rührer, Stickstofeinleitung und einem Destillationsaufsatz, der mit einem Kühler verbunden war, wurden die folgenden Substanzen eingewogen :

297 g $\doteq$ 2,15 Mol p-Hydroxybenzoesäure,
141,2 g $\doteq$ 0,85 Mol Terephthalsäure,
136,1 g $\doteq$ 0,85 Mol 2,7-Dihydroxynaphthalin,
471,7 g $\doteq$ 4,6 Mol Acetanhydrid,
1 g Magnesium und
0,5 g Antimon (tri) oxid.

Unter Stickstoffatmosphäre wurde mittels Salzbad auf 170 °C erhitzt. Sobald die Destillation von Essigsäure nachließ (nach ca. 1 Stunde), wurde die Temperatur im Reaktionsgefäß im Verlauf von zwei Stunden auf 250 °C und im Verlauf von zwei weiteren Stunden auf 300 °C erhöht. Nach Beendigung der Destillation wurde der Druck bis auf ca. 1 mbar gesenkt.

Während dieser Vakuumphase nahm die Viskosität der entstandenen Polymerschmelze stark zu. Die Schmelze wurde daher langsamer gerührt.

Am Ende dieser Phase war eine Gesamtmenge von 537 g Essigsäure (enthält restliches Acetanhydrid) aufgefangen worden.

Der erhaltene hell-beige Polyester wurde gemahlen und mit Aceton extrahiert. Die inhärente Viskosität des zurückbleibenden Polyesters betrug 1,7 dl/g.

Durch Endgruppenbestimmung mit Hilfe von Infrarotspektroskopie wurde ein mittleres Molekulargewicht $\overline{Mn}$ von ca. 21000 gefunden.

Bei der Analyse durch DSC (Differential Scanning Calorimetry, Aufheizgeschwindigkeit : 20 K/min) wurde eine Glastemperatur von ca. 130 °C gefunden.

Es wurde keine Schmelzendotherme beobachtet.

Vergleich

Beispiel 1 wurde mit der Abänderung wiederholt, daß das 2,7-Dihydroxynaphthalin durch 2,6-Dihydroxynaphthalin ersetzt wurde. Für die Endkondensation mußte die Temperatur auf 330 °C erhöht werden.

Glastemperatur : 120 °C

Schmelzendotherme : 300 °C

Molekulargewicht $\overline{Mn}$ : 19 000.

Die Polyester aus Beispiel 1 und aus dem Vergleich wurden im Vakuum bei 90 °C getrocknet und getrennt zu Normkleinstäben verspritzt.

Der Polyester aus Beispiel 1 wurde bei 280 °C Massetemperatur, der Polyester des Vergleichs bei 300 °C Massetemperatur verspritzt.

Tabelle 1

|  | Beispiel 1 | Vergleich |
|---|---|---|
| Schlagzähigkeit | 50 kJ/m² | 8,3 kJ/m² |
| Kerbschlagzähigkeit | 30 kJ/m² | 7 kJ/m² |
| Biegefestigkeit | 120 MPa | 98 MPa |
| Biege-E-Modul | 5020 MPa | 6890 MPa |
| Vicat B | 136°C | 137°C |
| Schmelzviskosität (bei 10³ sec.⁻¹) | 160 Pa.s (bei 280°C) | 800 Pa.s (bei 300°C) |

Beispiel 2

In das in Beispiel 1 beschriebene Reaktionsgefäß wurden die folgenden Substanzen eingewogen :

276,2 g ≙ 2 Mol p-Hydroxybenzoesäure,

166,1 g ≙ 1 Mol Terephthalsäure,

136,1 g ≙ 0,85 Mol 2,7-Dihydroxynaphthalin,

16,5 g ≙ 0,15 Mol Hydrochinon,

490 g ≙ 4,8 Mol Acetanhydrid,

1 g Zinkacetat und

0,5 g Germaniumoxid.

Das in Beispiel 1 erläuterte Temperatur-Zeit-Programm wurde befolgt. Die Endkondensationstemperatur betrug 290 °C. Der so hergestellte Polyester wies eine ausgeprägte Faserstruktur auf. Das erhaltene Produkt wurde mit Aceton extrahiert.

Inhärente Viskosität : 2,13 dl/g.

Nach Trocknen im Vakuum bei 90 °C wurde der Polyester im Spritzguß zu Normkleinstäben verarbeitet (Massetemperatur : 285 °C). In Tabelle 2 sind die bei der technologischen Prüfung erhaltenen Werte aufgeführt.

Beispiel 3

In die in Beispiel 1 beschriebene Reaktionsapparatur wurden die folgenden Substanzen eingefüllt :

276,2 g ≙ 2,0 Mol p-Hydroxybenzoesäure,

66,45 g ≙ 0,4 Mol Terephthalsäure,

99,68 g ≙ 0,6 Mol Isophthalsäure,

64,05 g ≙ 0,4 Mol 2,7-Dihydroxynaphthalin,

66,07 g ≙ 0,6 Mol Hydrochinon,

490 g ≙ 4,8 Mol Acetanhydrid,

0,5 g Titantetrabutylat und

0,5 g Germaniumoxid.

Der analog Beispiel 1 hergestellte Polyester besaß eine inhärente Viskosität von 1,2 dl/g.

Der granulierte Polyester wurde 18 Stunden bei 240 °C im Vakuum (ca. 1 mbar) nachkondensiert. Für das so behandelte Produkt wurde eine inhärente Viskosität von 2,98 dl/g ermittelt. Die Prüfung der technologischen Eigenschaften an durch Spritzguß hergestellten Normkleinstäben (Massetemperatur : 290 °C) brachte die in Tabelle 2 aufgelisteten Ergebnisse.

Tabelle 2

|  | Beispiel 2 | Beispiel 3 |
|---|---|---|
| Schlagzähigkeit | 54,2 kJ/m2 | 35,7 kJ/m² |
| Kerbschlagzähigkeit | 31,2 kJ/m² | 27,3 kJ/m² |
| Biegefestigkeit | 128 MPa | 111 MPa |
| Biege-E-Modul | 4390 MPa | 4910 MPa |
| Vicat B | 133°C | 140°C |
| Schmelzviskosität | 210 Pa.s | 400 Pa.s |
| (bei $10^3$ $sec^{-1}$) | (bei 285°C) | (bei 290°C) |

**Patentansprüche**

1. Thermotrope voll-aromatische Polyester auf Basis von
   (a) (gegebenenfalls substituierter) p-Hydroxybenzoesäure,
   (b) (gegebenenfalls substituierter) Iso- und/oder Terephthalsäure,
   (c) 2,7-Dihydroxynaphthalin und gegebenenfalls
   (d) Hydrochinon, Resorcin, Bisphenol-A, 4,4'-Dihydroxydiphenyl, -diphenylether, -diphenylsulfid und/oder -diphenylsulfon, die gegebenenfalls substituiert sind,
   wobei die Polyester die einkondensierten Reste (a) in Mengen von mindestens 40 Mol-%, bezogen auf die Summe der Reste (a), (b), (c) and (d), die einkondensierten Reste (c) in Mengen von 5 bis 30 Mol-%, bezogen auf die Summe der Reste (a), (b), (c) und (d), und die einkondensierten Reste (d) in Mengen von bis zu 90 Mol-%, bezogen auf die Summe der Reste (c) und (d), enthalten, mit der Maßgabe, daß das Molverhältnis der einkondensierten Reste b/(c + d) 0,95 bis 1,05 beträgt.

2. Polyester nach Anspruch 1, dadurch gekennzeichnet, daß die Polyester die einkondensierten Reste (c) in Mengen von 15 bis 30 Mol-%, bezogen auf die Summe der Komponenten (a), (b), (c) und (d), und die einkondensierten Reste (d) in Mengen von 10 bis 60 Mol-%, bezogen auf die Summe der Komponenten (c) und (d), enthalten.

3. Polyester nach Ansprüchen 1 und 2, dadurch gekennzeichnet, daß die Polyester die einkondensierten Reste (c) in Mengen von 20 bis 25 Mol-%, bezogen auf die Summe der Komponenten (a), (b), (c) und (d), und die einkondensierten Reste (d) in Mengen von 20 bis 35 Mol-%, bezogen auf die Summe der Komponenten (c) und (d), enthalten.

4. Verfahren zur Herstellung der Polyester nach Ansprüchen 1-3 durch Umsetzung der reaktionsfähigen Derivate der Komponenten (a) bis (c) und gegebenenfalls (d), die auch *in situ* hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem Druck.

5. Verfahren nach Anspruch 4, dadurch gekennzeichnet, daß sich eine Festphasennachkondensation anschließt.

6. Verwendung der Polyester nach Ansprüchen 1-3 zur Herstellung von Formkörpern, Filamenten, Fasern und Filmen.

**Claims**

1. Thermotropic fully aromatic polyesters based on
   (a) (optionally substituted) p-hydroxybenzoic acid,
   (b) (optionally substituted) iso- and/or terephthalic acid,
   (c) 2,7-dihydroxynaphthalene, and optionally
   (d) hydroquinone, resorcinol, bisphenol A, 4,4'-dihydroxydiphenyl-, -diphenylether, -diphenylsulphide and/or -diphenylsulphone, which may be substituted,
   which polyesters contain the condensed radicals (a) in quantities of at least 40 mol-%, based on the total of radicals (a), (b), (c) and (d), contain the condensed radicals (c) in quantities of 5 to 30 mol-%, based on the total of radicals (a), (b), (c) and (d), and contain the condensed radicals (d) in quantities of up to 90 mol-%, based on the total of the radicals (c) and (d), with the limitation that the mol ratio of the condensed radicals b/(c + d) is 0.95 to 1.05.

2. Polyesters according to claim 1, characterised in that the polyesters contain the condensed radicals (c) in quantities of 15 to 30 mol-%, based on the total of components (a), (b), (c) and (d), and contain the condensed radicals (d) in quantities of 10 to 60 mol-%, based on the total of components (c) and (d).

3. Polyesters according to claims 1 and 2, characterised in that the polyesters contain the condensed radicals (c) in quantities of 20 to 25 mol-%, based on the total of components (a), (b), (c) and (d), and contain the condensed radicals (d) in quantities of 20 to 35 mol-%, based on the total of components (c) and (d).

4. Process for the production of the polyesters according to claims 1-3 by reacting the reactive derivatives of components (a) to (c) and optionally (d), which may also be produced *in situ*, optionally in the presence of chain terminators, branching agents and catalysts at temperatures of 160 to 370 °C optionally under reduced pressure.

5. Process according to claim 4, characterised in that a solid phase post-condensation is carried out after the reaction.

6. Use of the polyesters according to claims 1-3 for the production of mouldings, filaments, fibres, and films.


**Revendications**

1. Polyesters thermotropes entièrement aromatiques à base de
(a) l'acide p-hydroxybenzoïque (éventuellement substitué),
(b) l'acide iso- et/ou téréphtalique (éventuellement substitué),
(c) le 2,7-dihydroxynaphtalène et, le cas échéant,
(d) l'hydroquinone, le résorcinol, le bisphénol A, le 4,4'-dihydroxydiphényle, l'éther 4,4'-dihydroxy-diphénylique, le sulfure de 4,4'-dihydroxydiphényle et/ou la 4,4'-dihydroxydiphénylsulfone, tous éventuellement substitués, ·
les polyesters contenant les radicaux condensés a) en quantités d'au moins 40 moles %, par rapport à la somme des radicaux a), b), c) et d), les radicaux condensés c) en quantités de 5 à 30 moles %, par rapport à la somme des radicaux a), b), c) et d), et les radicaux condensés d) en quantités allant jusqu'à 90 moles %, par rapport à la somme des radicaux c) et d), avec la condition supplémentaire que le rapport molaire des radicaux condensés b/(c + d) est de 0,95 à 1,05.

2. Polyesters selon la revendication 1, caractérisés en ce qu'ils contiennent les radicaux condensés c) en quantités de 15 à 30 moles %, par rapport à la somme des composants a), b), c) et d), et les radicaux condensés d) en quantités de 10 à 60 moles %, par rapport à la somme des composants c) et d).

3. Polyesters selon les revendications 1 et 2, caractérisés en ce qu'ils contiennent les radicaux condensés c) en quantités de 20 à 25 moles %, par rapport à la somme des composants a), b), c) et d), et les radicaux condensés d) en quantités de 20 à 35 moles %, par rapport à la somme des composants c) et d).

4. Procédé de préparation des polyesters selon les revendications 1 à 3 par réaction de dérivés réactifs des composants a) à c) et, le cas échéant, d) qui peuvent également être préparés *in situ*, éventuellement en présence de coupeurs de chaînes, d'agents ramifiants et de catalyseurs, à des températures de 160 à 370 °C, le cas échéant sous vide.

5. Procédé selon la revendication 4, caractérisé en ce que l'on fait suivre d'une condensation complémentaire en phase solide.

6. Utilisation des polyesters selon les revendications 1 à 3 pour la fabrication d'objets moulés, de filaments, de fibres et de pellicules.

7